(19) Europäisches Patentamt
European Patent Office
Office européen des brevets

(11) **EP 4 718 340 A1**

(12) **EUROPEAN PATENT APPLICATION**

(43) Date of publication:
**01.04.2026  Bulletin 2026/14**

(21) Application number: **24306593.5**

(22) Date of filing: **30.09.2024**

(51) International Patent Classification (IPC):
**G06N 10/40** (2022.01)

(52) Cooperative Patent Classification (CPC):
**G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Pasqal**
**91300 Massy (FR)**

(72) Inventors:
• **LASSABLIERE, Lucas**
  **91300 MASSY (FR)**
• **TOUATI, Selim**
  **91300 MASSY (FR)**
• **de HOND, Julius**
  **91300 MASSY (FR)**

(74) Representative: **Lavoix**
  **2, place d'Estienne d'Orves**
  **75441 Paris Cedex 09 (FR)**

(54) **A METHOD FOR DETERMINING CALIBRATED POSITIONS FOR TRAPPING SITES OF A QUANTUM COMPUTER**

(57)  The invention relates to a method for determining at least a set of calibrated positions for N trapping sites of a quantum computer (12), so that the N trapping sites positioned according to such a set of calibrated positions match a desired positioning pattern once particles are trapped in the N trapping sites, N being an integer superior or equal to 2, each set of calibrated positions being such that the spacing between each trapping site is inferior or equal to a minimal interaction distance, the minimal interaction distance being the minimal distance at which two particles interact with each other.

FIG.3

EP 4 718 340 A1

**Description**

TECHNICAL FIELD OF THE INVENTION

The present invention concerns a method for determining calibrated positions for trapping sites of a quantum computer. The present invention also concerns an associated computing system.

BACKGROUND OF THE INVENTION

Increasing the fidelities of operations on a quantum processing unit (QPU) is a crucial step in optimizing its overall performance on the path towards solving useful problems.

However, without detailed low-level simulations, the many variables involved make such optimizations time-consuming, if not daunting.

Hence, to obtain relevant result from a QPU, it is necessary to calibrate it, not only on the mechanic point of view but also on the atom side, that is to say to build a reliable register.

To obtain a reliable register at the end, it is necessary to consider some parameters fluctuations to which the register is sensitive, such as temperature fluctuations and interaction energy fluctuations between the atoms. The register is indeed sensitive to these parameters fluctuations, such as temperature and interaction energy.

Nevertheless, calibration measurements cost significant time and are not precise enough, which renders the calibration complex to implement and does not solve completely the problem.

SUMMARY OF THE INVENTION

Hence, there exists a need for a faster and more precise way to calibrate a quantum device so as to increase the fidelities of operations performed on the quantum device.

To this end, the invention relates to a method for determining at least a set of calibrated positions for N trapping sites of a quantum computer, so that the N trapping sites positioned according to such a set of calibrated positions match a desired positioning pattern once particles are trapped in the N trapping sites, N being an integer superior or equal to 2, each set of calibrated positions being such that the spacing between each trapping site is inferior or equal to a minimal interaction distance, the minimal interaction distance being the minimal distance at which two particles interact with each other, the method being implemented by a computing system comprising the quantum computer and a classical computer, and comprising the following steps:

- building a calibration array of trapping sites, the calibration array comprising sets of N trapping sites, the trapping sites of each set being spaced with respect to each other by an intra-spacing distance which is inferior or equal to the minimal interaction distance, the trapping sites of the different sets being spaced with respect to each other by an inter-spacing distance which is superior to the minimal interaction distance,
- performing measurements on particles stochastically loaded in the calibration array, while applying, on the loaded particles, an excitation signal at a splitting energy separating the particle levels, the measurements comprising:

    • measurements on particles which are the only particles trapped in sets of N trapping sites of the calibration array, called 1-body measurements, and
    • measurements on M particles trapped in sets of N trapping sites of the calibration array, called M-body measurements, M being an integer superior or equal to two and inferior or equal to N,

- processing the measurements so as to extract at least:

    • a set of 1-body experimental parameters on the basis of the 1-body measurements, and
    • a set of M-body experimental parameters on the basis of the M-body measurements,

- simulating expected M-body parameters on the basis of 1-body experimental parameters, the simulations consisting in varying at least one fitting parameter until the expected M-body parameters match the M-body experimental parameters, the or at least one fitting parameter being the interaction energy between pairs of particles trapped in a set of N trapping sites,
- comparing the measured interaction energy between pairs of particles trapped in a set of N trapping sites in the calibration array, and the simulated interaction energy, and deducing a corresponding error of spacing between the positions of N trapping sites corresponding to the measured interaction energy and the position of N trapping sites corresponding to the simulated interaction energy, and

- determining corrections for the positions of the trapping sites of the calibration array of trapping sites as a function of the determined error of spacing, the corrections enabling to obtain set(s) of calibrated positions for N trapping sites of the quantum computer, so that the N trapping sites positioned according to each set of calibrated positions match a desired positioning pattern once particles are trapped in the N trapping sites.

The method according to the invention may comprise one or more of the following features considered alone or in any combination that is technically possible:

- the calibration array forms an array having lines and columns, the sets of N trapping sites being positioned at the intersections of the lines and columns of the array ;
- directions of reference are defined as being along the lines or along the columns of the array, each direction of reference being associated with an intra-spacing distance so that the trapping sites of each set of N trapping sites along said direction of reference are spaced with respect to each other by the intra-spacing distance, at least two directions of reference being associated with different intra-spacing distances;
- the directions of reference are located from the center of the array to the ends of the array in ascending order of the intra-spacing distances associated with said directions of reference;
- M-body measurements are obtained for the different intra-spacing distances of the directions of reference of the array, the processing step, the simulation step and the comparison step being carried out for each different intra-spacing distance, the step of determining corrections being carried out as a function of the determined errors of spacing obtained for the different intra-spacing distances;
- during the step of performing measurements, the excitation signal has a predetermined duration enabling to perform a Rabi oscillation, the predetermined duration being divided into timesteps, the measurements being taken several times for each timestep of the predetermined duration;
- when the particles are neutral atoms, the measurements being carried out by exciting the corresponding particles and measuring the intensity of the fluorescent light emitted by said particles which de-excite;
- the 1-body experimental parameters and the M-body experimental parameters are each chosen among the following parameters: a heatmap, or average values over several trapping sites, of the damping rate defined as the inverse of the lifetime of a Rabi oscillation, a heatmap, or average values over several trapping sites, of the state-preparation-and-measurement error which is the error of detection of the presence or absence of a particle, a heatmap, or average values over several trapping sites, of the loading probability of particles per region of the calibration array and a particle loading probability on the calibration array;
- the step of processing measurements also enables to obtain additional parameters which are relative to the excitation signal, the additional parameters being chosen among: the intensity of the excitation signal, the detuning of the excitation signal and the alignment of the excitation signal, such additional parameters enabling to calibrate the source(s) of emission of the excitation signal;
- the simulation step is based on an equation and a Monte-Carlo approach, the equation enabling to simulate the interaction of the particles with the excitation signal while considering the interactions between particles trapped in a set of N trapping site;
- the method comprises a step of effectively generating N trapping sites by the generator of trapping sites on the basis of the set(s) of calibrated positions so that the N trapping sites are effectively positioned according to the calibrated position of a set, enabling to match a desired positioning pattern once the N trapping sites are filed with particles;
- during the step of performing measurements, the particles stochastically loaded in the trapping sites of the calibration array have not been rearranged;
- the particles are two-level systems able to undergo a Rabi oscillation, the particles being preferably neutral atoms;
- one or several other fitting parameters that are varied during the simulation step are chosen among: the detuning, the temperature of the particles, the trapping site depth, the frequency of the trapping sites, and the associated standard deviations of the positions of the N trapping sites in the set.

The invention also relates to a computing system comprising a quantum computer and a classical computer, the computing system being configured for carrying out steps of a method as previously described.

BRIEF DESCRIPTION OF THE DRAWINGS

The invention will be easier to understand in view of the following description, provided solely as an example and with reference to the appended drawings in which:

- Figure 1 is a schematic view of an example of a computing system configured for determining sets of calibrated positions for trapping sites of a quantum computer,

- Figure 2 is a schematic view of an example of an organigram of a method for determining sets of calibrated positions for trapping sites of a quantum computer,
- Figure 3 is a schematic view of an example of a calibration array of trapping sites, particles having been stochastically loaded in the calibration array,
- Figure 4 is an illustration of an example of different measurement possibilities enabling to extract 1-body experimental parameters and M-body experimental parameters,
- Figure 5 is an illustration of an example of a heatmap plotting the loading probability, and
- Figure 6 is a schematic view of an example of a simulation model.

## DETAILED DESCRIPTION OF SOME EMBODIMENTS

In the description, the terms "able to", "suitable for", and "configured for" are considered equivalent. The terms "trapping sites" and "traps" are also considered equivalent.

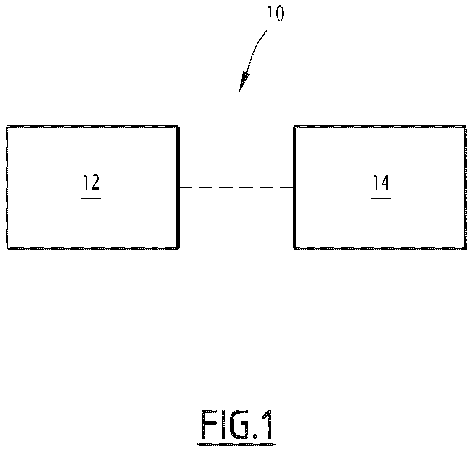

A computing system 10 is illustrated on figure 1. The computing system 10 is configured to implement a method for determining calibrated positions for trapping sites of a quantum computer 12.

The computing system 10 comprises the quantum computer 12 (quantum processing unit or QPU) and a classical computer 14.

In an example, the quantum computer 12 comprises a source of particles, a generator of trapping sites for particles, a detecting device and hardware elements.

In the case of neutral atoms, the source of particles comprises a vacuum chamber in which the particles (for example atoms) are located. In particular, during use, a vacuum is created in the vacuum chamber and a dilute atomic vapor is formed in the vacuum chamber. Other embodiments are nonetheless possible.

The generator of trapping sites is able to generate a laser beam which when focused generates an array of trapping sites for particles (e.g., optical tweezers). For example, the array of trapping sites can be 1-dimensional, 2-dimensional or 3-dimensional.

In an example of implementation, the generator of trapping sites comprises a laser source, or equivalent, able to generate a laser beam and a beam shaper able to shape the laser beam (e.g., to impart a specific intensity pattern to the laser beam) so as to obtain an array of trapping sites for particles when the laser beam is focused.

The beam shaper is, for example, a spatial light modulator (SLM), such as an optical phase modulator, preferably a liquid crystal optical modulator (LCOS-SLM), or a digital micromirror device (DMD). In another example, the beam shaper comprises one or more acousto-optical deflector, or a device with metasurfaces.

The detecting device is configured to detect the presence of particle(s) in the qubit register. The detecting device is, for example, a camera such as a charge-coupled device (CCD) camera, or any suitable imaging technology. For example, in the case of atoms, the camera is suitable to detect the fluorescence emitted from the atoms.

The hardware elements enable to manipulate the particles trapped in the trapping sites and forming the qubits, so as to perform quantum operations on the qubits. In other words, the particles trapped in the trapping sites collectively form a quantum register.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327.

Typically, the quantum computer 12 uses the quantum properties of matter, such as superposition and entanglement, to perform operations on the qubits. In particular, a qubit refers to a two-level quantum system.

In a non-limiting example, a qubit may comprise two basic quantum states |0> and |1> representing the possible quantum states of the qubit. According to the superposition principle of quantum mechanics, any superposition of the form $a|0> + b|1>$ (a and b being complex numbers and $aa^*+bb^*=1$) is a possible quantum state of the qubit. The population in the |0> state is noted $P_0 = |a|^2$ and in the |1> state is noted $P_1 = |b|^2$.

Typically, the particles meant to be trapped in the trapping sites are two-level systems able to undergo a Rabi oscillation. A Rabi oscillation is a quantum physics phenomenon describing the quantum dynamics of a two-level system in the presence of an oscillatory driving field. According to the superposition principle previously described, the populations $P_0(t) = |a(t)|^2$ and $P_1(t) = |b(t)|^2$ oscillate as a function of the Rabi frequency, the detuning and a damping rate.. Rabi oscillations are thus associated with a Rabi frequency, which is the frequency of particles oscillating between the two states of the two-level system. The Rabi frequency is proportional to the amplitude of the applied electromagnetic field.

Preferably, the particles are atoms, and in particular electrically neutral atoms, that interact with a monotonically decaying interaction. Neutral atoms are, for example, alkali atoms (such as Rubidium or Cesium atoms) or alkaline-earth atoms (such as Strontium or Ytterbium atoms). In a variant, the particles are molecules, which can be polar molecules, or highly magnetic atoms that have significant magnetic dipoles.

The particles have a fundamental state (no excitation) and at least one excited state. The excited state is, for example, a Rydberg state.

The classical computer 14 comprises typically a processor comprising a data processing unit, memories and a reader for information media. Eventually, the classical computer 14 comprises a human machine interface, such as a keyboard, and a display.

In an example of implementation, the classical computer 14 interacts with a computer program product. The computer program product comprises an information medium. The information medium is a medium readable by the classical computer 14, usually by the data processing unit. The readable information medium is a medium suitable for storing electronic instructions and capable of being coupled to a computer system bus. On the information medium is stored the computer program comprising program instructions. The computer program is loadable on the data processing unit and is adapted to entail the implementation of at least the processing step, the simulation step, the comparison step, and the corrections determination step of a method that will be described later in the description, when the computer program is loaded on the processing unit of the classical computer.

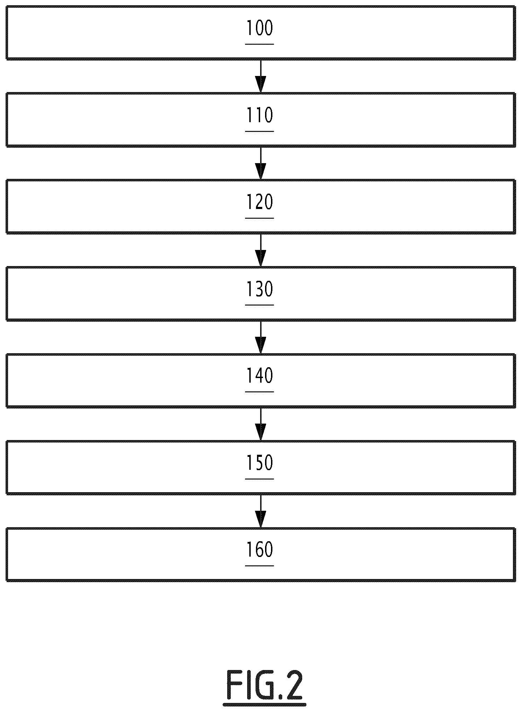

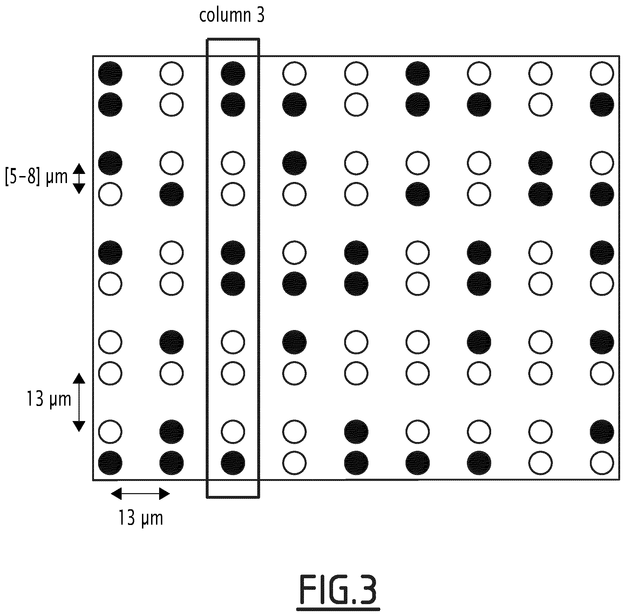

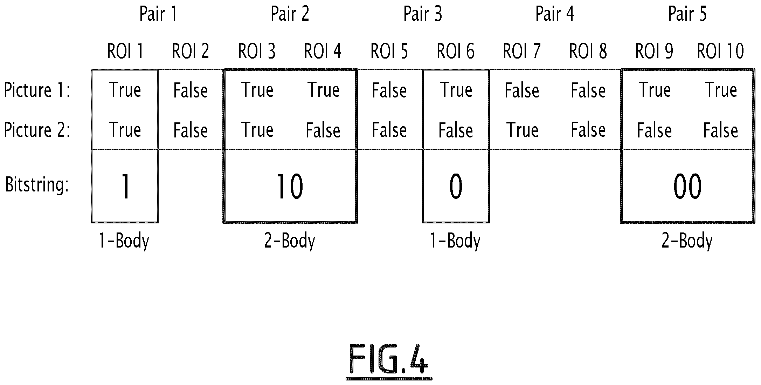

A method for determining calibrated positions for trapping sites of a quantum computer 12, will now be described with reference to the organigram of figure 2, to figure 3 which illustrates an example of a calibration array used in this method, and to figures 4 to 6 which illustrate examples of some steps of the method.

The method is implemented by the computing system 10.

The method enables to determine at least a set of calibrated positions for N trapping sites of the quantum computer 12, so that the N trapping sites positioned according to such a set of calibrated positions match a desired positioning pattern once particles are trapped in the N trapping sites.

N is an integer which is superior or equal to 2.

Each desired positioning pattern defines desired positions for the N trapping sites. Each desired positioning pattern is predetermined, for example by an operator. Typically, each desired positioning pattern is defined before the generation of the calibration array (that will be described later).

Each set of calibrated positions corresponds to a proper desired positioning pattern. Hence, several sets of calibrated positions can be calculated so as to cover a large amount of desired positioning pattern.

Each set of calibrated positions is such that the spacing between each trapping site is inferior or equal to a minimal interaction distance. The minimal interaction distance is the minimal distance at which two particles interact with each other.

When N particles are trapped in the N trapping sites, as the N particles interact with each other (because at a distance below the minimal interaction distance), the separation between particles can be calibrated by measuring their interaction energy. The purpose of the method is therefore to evaluate whether the position of the trapping sites of the generated calibration array (described in what follows), in which the particles are trapped in the trapping sites, equals the desired positioning pattern.

As an example, the desired positioning pattern has a rectangular or a square shape.

The calibration method comprises a step 100 of building a calibration array of trapping sites. The building step 100 is implemented by the quantum computer 12.

Typically, the dimensions of the calibration array are superior or equal to the dimensions of the patterns that are going to be generated during the calculation time. This enables to take into account and to characterize inhomogeneity on the quantum register.

The calibration array comprises sets of N trapping sites, N being the same number than those of the positioning pattern. If N = 2, the sets are formed of pair of trapping sites.

The trapping sites in the same set are spaced with respect to each other by an intra-spacing distance which is inferior or equal to the minimal interaction distance. The intra-spacing distance can be different between the different sets.

The trapping sites of the different sets are spaced with respect to each other by an inter-spacing distance which is superior to the minimal interaction distance. The inter-spacing distance can be different between the different sets.

In an example of implementation, as illustrated on figure 3, the calibration array forms an array having lines and columns. The sets of N trapping sites are positioned at the intersections of the lines and columns of the array. In a variant, the sets of N trapping sites are arbitrary positioned in space.

Preferably, the array has at least 3 columns and 3 lines.

Preferably, directions of reference are defined as being along the lines or along the columns of the array. Each direction of reference is associated with an intra-spacing distance so that the trapping sites of each set of N trapping sites along said direction of reference are spaced with respect to each other by the intra-spacing distance. At least two directions of reference are associated with different intra-spacing distances. This enables the measurements to be performed for different intra-spacing distances at the same time. We can then determine the scaling of the spacing error as a function of the distance.

Preferably, the directions of reference are located from the center of the array to the ends of the array in ascending order of the intra-spacing distances associated with said directions of reference. Indeed, for the measurements of the step 110, the Rabi frequency has to be comparable to the interaction energy. For example in the case of neutral atoms, when considering directions of reference along the columns of the array, if we consider that the Rydberg beams are well aligned with respect to the center of the register, then the central columns (x-0) will experience a stronger intensity (i.e. a higher Rabi frequency) than the columns at the edges. Hence, it is better to place the columns with the smallest intra-spacing distances (i.e. the highest interaction energies) at the center of the register.

As an example, on the calibration array of figure 3, the directions of reference are along the columns of the array. In this example, N=2. The trapping sites of each set of N trapping sites along the same column are each spaced by the same intra-spacing distance.

In the example of figure 3, the different intra-spacing distances are comprised between 5 micrometers ($\mu$m) and 8 $\mu$m in the same line.

The different sets are spaced between each other by an inter-spacing different from the intra-spacing distance so that the particles of the different sets do not interact with each other. For neutral atoms, the inter-spacing distance between each set is at least of 10 $\mu$m. The sets of trapping sites can be considered as independent because the interaction energy at this distance is small compared to the effective Rabi frequency and detuning (few MHz) that dominate the dynamics of the system.

The calibration method comprises a step 110 of performing measurements on particles stochastically loaded in the calibration array, while applying, on the loaded particles, an excitation signal at a splitting energy separating the particle levels. For example, the excitation signal is an exciting electromagnetic field at an energy corresponding to the level separation of the particles (atoms for example). This results in a flip-flopping of the population which we call a Rabi oscillation (and the frequency at which this happens is the Rabi frequency). The excitation signal is thus suitable to perform a Rabi oscillation on the trapped particles.

The step 110 of performing measurements is implemented by the quantum computer 12.

The measurements comprise:

- measurements on particles which are the only particles trapped in sets of N trapping sites of the calibration array, called 1-body measurements, and
- measurements on M particles trapped in sets of N trapping sites of the calibration array, called M-body measurements. M is an integer superior or equal to two (at least two trapping sites of the set are occupied) and inferior or equal to N. In the specific case where N=2, M is also equal to 2.

Preferably, during the step 110 of performing measurements, the particles stochastically loaded in the trapping sites of the calibration array have not been rearranged. This enables to extract 1-body measurements and M-body measurements at the same time.

In an example of implementation, when the particles are neutral atoms, the measurements are carried out by exciting the corresponding particles and measuring the intensity of the fluorescent light emitted by said particles which de-excite.

The excitation signal is for example chosen so as to entail a hyperfine transition or a Rydberg transition.

In an example of implementation, during the step of performing measurements, the excitation signal has a predetermined duration enabling to perform a Rabi oscillation. The predetermined duration is divided into timesteps. The measurements are taken several times for each timestep of the predetermined duration.

For example, in the case of neutral atoms, the predetermined duration is discretized into anywhere between 5 and 200 timesteps, depending on the calibration. Because of the probabilistic nature of quantum physics, fluorescence measurements of an atom are repeated several times for a given timestep after the calculation (between 10 and 1000 times) to obtain the population (which is the average of the fluorescence measurements). Hence, if we use 10 timesteps for a Rabi oscillation, and if for each timestep we perform 100 measurements, we have to load 1000 times atoms in tweezers (10x100) and to perform in total 1000 measurements. In other words, we have to reload tweezers each time we do a measurement.

The calibration method comprises a step 120 of processing the measurements. The processing step 120 is implemented by the classical computer 14.

The processing step 120 enables to extract at least:

- a set of 1-body experimental parameters on the basis of the 1-body measurements, and
- a set of M-body experimental parameters on the basis of the M-body measurements.

Preferably, the 1-body experimental parameters and the M-body experimental parameters are each chosen among the following parameters:

- a heatmap (or average values over several trapping sites) of damping rate defined as the inverse of the lifetime of a Rabi oscillation,
- a heatmap (or average values over several trapping sites) of the state-preparation-and-measurement error (SPAM error) which is the error of detection of the presence or absence of a particle,
- a heatmap (or average values over several trapping sites) of the loading probability of particles per region of the calibration array, and
- a particle loading probability on the calibration array.

The damping rate and the SPAM error are for example extracted fitting experimental 1-body measurements. The fitting function is for example obtained on the basis of the following formula (from which and $y$ can be extracted):

$$\grave{P}_g(\Omega, \gamma, t) = \frac{\Omega^2}{2\Omega^2 + \gamma^2}\left[1 + e^{-\frac{3\gamma t}{4}}(\cos(\grave{\Omega}t) + \frac{3\gamma}{4\grave{\Omega}}\sin(\grave{\Omega}t)]\right.$$

Where:

- $\grave{P}_g$ ($\Omega, \gamma, t$) is the probability to detect an atom in the ground state.

- $\grave{\Omega} = \sqrt{\Omega^2 - \frac{\gamma^2}{16}}$ is the effective Rabi frequency in the presence of damping.

- $\Omega$ is the Rabi frequency without damping.
- $\gamma$ is the damping rate.

In the present case, the SPAM errors are quite large for some measurements, so the following formula enables to obtain, $\gamma$, $\varepsilon$, and $\varepsilon'$.

$$P_g(\Omega, \gamma, t) = (1 - \varepsilon)[\grave{P}_g(\Omega, \gamma, t) + \varepsilon'\grave{P}_r(\Omega, \gamma, t)]$$

Where:

- $P_g(\Omega,\gamma,t)$ is the probability to detect an atom in the ground state.

- $\grave{P}_r$ ($\Omega,\gamma,t$) is the probability to detect an atom in the Rydberg state.
- $\varepsilon$ is the false negative detection probability for a ground state atom, i.e. the chance that we fail to detect an atom in the ground state, incorrectly detecting it as a Rydberg atom.
- $\varepsilon'$ is the false positive detection probability for a ground state atom, i.e. the chance that we fail to detect an atom in the Rydberg state, and incorrectly detect it as a ground-state atom.

In another example, the damping rate and the SPAM error can also be measured independently and more accurately with more specific measurements done before the calibration. It is, for instance, possible to transfer atoms to the Rydberg state with high fidelity using an adiabatic sweep, and to measure $\varepsilon'$ separately, such that the measurement is robust under fluctuations.
In the case of neutral atoms, the SPAM error rates can be obtained from the initial contrast of the measured oscillations.
In the case of neutral atoms, the damping rate can be obtained from the decrease in contrast of the oscillation over time, by fitting the aforementioned functions.
Figure 4 is an illustration of five different measurement possibilities for N=2. On this figure, ROI stands for region of interest. Due to the stochastic loading of the register, each pair of sites in it has a random occupation in the first image ("Picture 1" → Measurement corresponding to the loading probability). If an atom is present, it is labeled as True, and if no atom is present it is labeled as False. After Picture 1 there are three possibilities: a pair of sites has two, one, or no atoms. In these cases, it is, respectively, used for a two- or one-body measurement, or it is discarded. The measurements are done by exposing the atoms to a constant pulse of light of varying duration, during which they undergo Rabi flopping. We scan the duration of the pulse, and measure the population at the end ("Picture 2") resulting in the bit strings indicated. For a single-body measurement this results in the well-known Rabi oscillation from which we can extract single-body parameters such as the SPAM rates and damping coefficients. From the two-body measurements we primarily extract the interaction coefficient.
The heatmap of the loading probability and the particle loading probability on the calibration array are for example obtained through a measurement performed each time after the stochastic trap loading. For neutral atoms, the measurement gives the fluorescence light of the atoms in the tweezers. Thanks to our optical setup, we are able to detect individually the fluorescence light of each tweezer simultaneously. So for a given trap, if we detect enough fluorescence light, we conclude that there is an atom in the tweezer, and if there is no fluorescence light, we conclude there is no atom is in the tweezer. If we note {0 → the absence of fluorescence light} and {1 → the presence of fluorescence light}, the loading probability is the number of times we detect fluorescence light divided by the total number of florescence measurements on the said trap. So, if we detect (55 times → 1, and 45 times → 0), the loading probability is 55/100 = 55%. If we repeat this for each trap, we can build a loading probability heatmap, a 2D-color plot where we represent the loading probability for each trap.

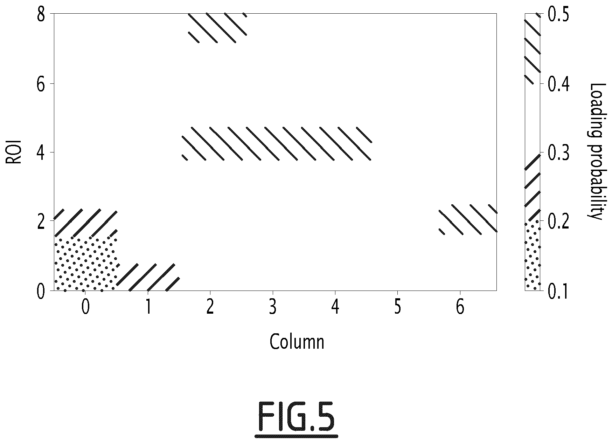

Figure 5 is an illustration of an example of a heat map plotting the loading probability. Due to the stochastic loading of tweezer traps, the filling of a trap is random. The average rate at which a trap is filled is typically around 50%. Due to experimental imperfections such as insufficient power or misaligned beams it can significantly drop below this, which has to be monitored. One way of doing that is using a heat map such as the one of figure 5, where each square corresponds to a trap, and the color sets the loading rate. A value around 0.5 is good, whereas values that are much lower are bad. The calibration measurement shown here suggests the traps at the lower left corner are not capturing atoms very efficiently.

In an example of implementation, the step 120 of processing measurements also enables to obtain additional parameters which are relative to the excitation signal. Such additional parameters enable to calibrate the source(s) of emission of the excitation signal.

Preferably, the additional parameters are chosen among:

- the intensity of the excitation signal,
- the detuning of the excitation signal, and
- the alignment of the excitation signal.

In the case of neutral atoms, the intensity of the excitation signal is obtained through the frequency of the Rabi oscillation.

In the case of neutral atoms, the detuning is obtained via a spectroscopic measurement (measurement of the population as a function of the laser frequency). In this case, we consider that the lasers have been already calibrated at resonance with the Rydberg transition (so this means the detuning is equal to 0).

In the case of neutral atoms, the alignment of the excitation signal is evaluated through the inhomogeneities in intensity of the fluorescent light emitted by the atoms which de-excite.

Preferably, the processing step 120 also comprises the extraction, from the measurements of step 110, of the measured interaction energy between pairs of particles trapped in a set of N trapping sites in the calibration array. For example, the measurements are fitted with a model. One of the parameter of this model is the interaction energy, which is taken as being the measured interaction energy.

The calibration method comprises a step 130 of simulating expected M-body parameters on the basis of 1-body experimental parameters. The simulation step 130 is implemented by the classical computer 14.

The simulations consist in varying at least one fitting parameter until the expected M-body parameters match the M-body experimental parameters.

The or at least one fitting parameter is the interaction energy between pairs of particles trapped in a set of N trapping sites.

The eventual other fitting parameters are for example chosen among: the detuning, the temperature of the particles, the trapping site depth (if the trapping sites are left on during the measurements), the frequency of the trapping sites and the associated standard deviations of the positions (temperature effect) of the N trapping sites in the set.

In the case of neutral atoms, the interaction energy and the position of the atoms are linked via the relation:

Interaction $\text{energy} = \dfrac{C_6}{distance^6}$, where $C_6$ is a constant determined numerically that depends on the Rydberg level that has been chosen (usually having a principal quantum number between 40 and 100).

In our study, we consider the C6 value as a fixed reference (i.e. we assume that it is perfectly known), which leaves the interaction energy or the distance between the atoms as a free parameter. Alternatively we could consider interatomic distance as a reference and use that to calibrate C6.

In an example, the simulation step is based on an equation and a Monte-Carlo approach. The said equation is for example a Master equation or a Schrödinger equation. Such equation enables to simulate the interaction of the particles with the excitation fields while considering the interactions between particles trapped in a set of N trapping sites. In particular, a Master equation is an equation used to describe the time evolution of a system that can be modeled as being in a probabilistic combination of states at any given time.

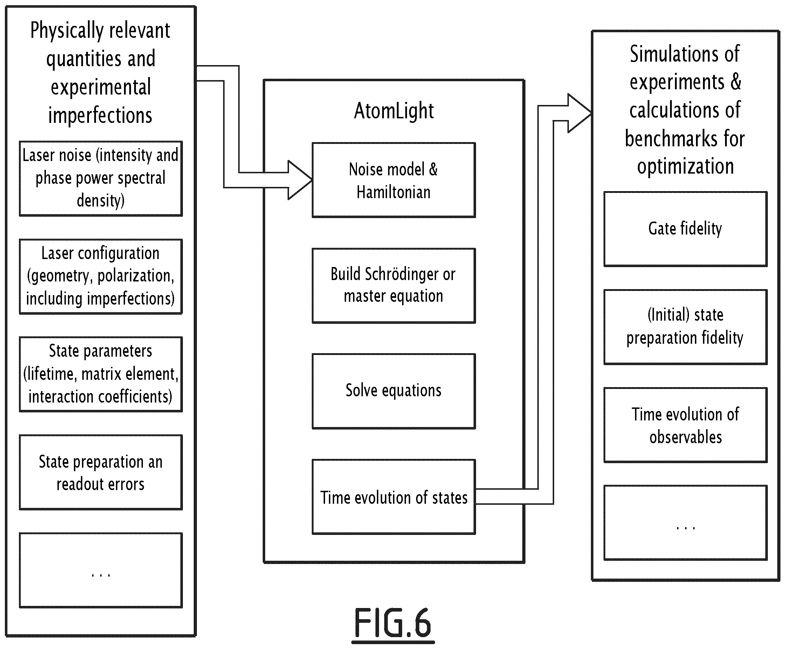

An example of a simulation model, enabling to perform the simulation is described on figure 6. This model simulates a quantum processor on an atomic physics level. In order to do so, it takes physically relevant quantities and experimental imperfections as inputs. These comprise for example (but are note limited to):

- Laser noise, both in the intensity and phase, possibly in the form of a power spectral density function that describes how much noise is present at each frequency.
- The laser configuration, in particular how the beams are physically arranged in the lab (which affects some decoherence mechanisms such as dephasing via the Doppler shift), but also the polarization, which determines which states get coupled, and how strongly they get coupled, and imperfections in the polarization. This can cause unwanted couplings that have to be added to the simulation in order to be accurate.
- Relevant state parameters of the atomic levels involved, for instance the lifetimes (which are important for calculating the decoherence), the matrix elements (which set the coupling strength), and the interaction coefficients.
- State preparation and readout errors, which are effective parameters that can be used to realistically simulate noise phenomena before and after the quantum dynamics that lie at the core of the AtomLight simulation.

This model takes in all these parameters to build a simulation consisting of a (possibly time-dependent) Hamiltonian, and (if necessary - optional) converts it to a master equation using the Lindbladian operator. General stochastic processes are sampled by averaging multiple simulations over randomly generated signals. Generally, this model solves the evolution of quantum state vectors or density matrices in time. This can be used to do simulations of experiments and to calculate relevant benchmarks which are used for optimization. This makes it a general and flexible tool, but it can for instance be used to extract:

- The gate fidelity, which is how reliably a particular operation is implemented in the QPU. Realistic experimental noise parameters cause deviations from the ideal case, and by simulating this it's possible to minimize these deviations through optimization.
- The state preparation fidelity; we require the atoms to be initialized in a particular state, but due to experimental limitations it isn't straightforward to do this with 100% fidelity. By accounting for the effects of imperfections this can be simulated and optimized.
- Usually, the time evolution of states and observables can be calculated. This is what users typically measure on the QPU during experiments. By having a reliable simulation of these experiments it is (in some cases) possible to say beforehand whether or not an experiment will produce the expected result in the presence of noise.

The calibration method comprises a step 140 of comparing the measured interaction energy between pairs of particles trapped in a set of N trapping sites in the calibration array, and the simulated interaction energy corresponding to the simulated positions of trapping sites.

Preferably, the measured interaction energy between pairs of particles trapped in a set of N trapping sites in the calibration array is extracted from the measurements of step 110, for example during the processing step 120. For example, the measurements are fitted with a model. One of the parameter of this model is the interaction energy, which is taken as being the measured interaction energy.

If the measured interaction energy is equal to the simulated interaction energy, the conclusion is that the spacing between trapping sites of a set of N trapping sites in the calibration array is equal to the spacing of the trapping site in the simulation. If the measured interaction energy is not equal to the simulated interaction energy, the conclusion is that the spacing between trapping site of a set of N trapping sites in the calibration array is different to the spacing of the trapping site in the simulation. A corresponding error of spacing is then determined on the basis of the result of the comparison. The comparison step 140 is implemented by the classical computer 14.

The calibration method comprises a step 150 of determining corrections for the positions of the trapping sites of the calibration array of trapping sites as a function of the determined error of spacing, so that each set of N trapping sites match a desired positioning pattern once particles are trapped in the N trapping sites.

The determination step 150 is implemented by the classical computer 14.

The corrections enable to compensate the error of spacing. The determined corrections enable to obtain set(s) of calibrated positions for N trapping sites of the quantum computer 12, so that the N trapping sites positioned according to each set of calibrated positions match a desired positioning pattern once particles are trapped in the N trapping sites.

In an example of implementation, where the calibration array is associated with different intra-spacing distances (for different directions of reference): M-body measurements are obtained during step 110 for the different intra-spacing distances of the directions of reference of the array. The processing step 120, the simulation step 130 and the comparison step 140 are carried out for each different intra-spacing distance. The step of determining corrections 150 is carried out as a function of the determined errors of spacing obtained for the different intra-spacing distances, enabling to obtain several sets of calibrated positions for N trapping sites (each enabling to match with a specific desired positioning pattern).

Optionally, the calibration method comprises a step 160 of effectively generating N trapping sites by the generator of trapping sites on the basis the set(s) of calibrated positions so that the N trapping sites are effectively positioned according to the calibrated position of a set, enabling to match a desired positioning pattern once the N trapping sites are filed with particles.

After effectively loading and rearranging particles in the N trapping sites, computing operations can then be performed on the quantum computer 12.

Hence, the above method enables to characterize the spacing (relative distance) between particles in a register. Characterizing the spacing allows to correct the spacing and detect spacing inhomogeneities on the register. Therefore, this enables to calibrate a quantum device in a faster and more precise way, and thus to increase the fidelities of operations performed on the quantum device.

For example, the calibration method can be performed during a calculation step or could happen before the delivery of a QPU.

The person skilled in the art will understand that the embodiments and variants described above in the description can all be combined provided that they are technically compatible.

**Claims**

1. A method for determining at least a set of calibrated positions for N trapping sites of a quantum computer (12), so that the N trapping sites positioned according to such a set of calibrated positions match a desired positioning pattern once particles are trapped in the N trapping sites, N being an integer superior or equal to 2, each set of calibrated positions being such that the spacing between each trapping site is inferior or equal to a minimal interaction distance, the minimal interaction distance being the minimal distance at which two particles interact with each other, the method being implemented by a computing system (10) comprising the quantum computer (12) and a classical computer (14), and comprising the following steps:

   - building a calibration array of trapping sites, the calibration array comprising sets of N trapping sites, the trapping sites of each set being spaced with respect to each other by an intra-spacing distance which is inferior or equal to the minimal interaction distance, the trapping sites of the different sets being spaced with respect to each other by an inter-spacing distance which is superior to the minimal interaction distance,
   - performing measurements on particles stochastically loaded in the calibration array, while applying, on the loaded particles, an excitation signal at a splitting energy separating the particle levels, the measurements comprising:

      • measurements on particles which are the only particles trapped in sets of N trapping sites of the calibration array, called 1-body measurements, and
      • measurements on M particles trapped in sets of N trapping sites of the calibration array, called M-body measurements, M being an integer superior or equal to two and inferior or equal to N,

   - processing the measurements so as to extract at least:

      • a set of 1-body experimental parameters on the basis of the 1-body measurements, and
      • a set of M-body experimental parameters on the basis of the M-body measurements,

   - simulating expected M-body parameters on the basis of 1-body experimental parameters, the simulations consisting in varying at least one fitting parameter until the expected M-body parameters match the M-body experimental parameters, the or at least one fitting parameter being the interaction energy between pairs of particles trapped in a set of N trapping sites,
   - comparing the measured interaction energy between pairs of particles trapped in a set of N trapping sites in the calibration array, and the simulated interaction energy, and deducing a corresponding error of spacing between the positions of N trapping sites corresponding to the measured interaction energy and the position of N trapping sites corresponding to the simulated interaction energy, and
   - determining corrections for the positions of the trapping sites of the calibration array of trapping sites as a function of the determined error of spacing, the corrections enabling to obtain set(s) of calibrated positions for N trapping sites of the quantum computer (12), so that the N trapping sites positioned according to each set of calibrated positions match a desired positioning pattern once particles are trapped in the N trapping sites.

2. A method according to claim 1, wherein the calibration array forms an array having lines and columns, the sets of N trapping sites being positioned at the intersections of the lines and columns of the array.

3. A method according to claim 2, wherein directions of reference are defined as being along the lines or along the columns of the array, each direction of reference being associated with an intra-spacing distance so that the trapping sites of each set of N trapping sites along said direction of reference are spaced with respect to each other by the intra-spacing distance, at least two directions of reference being associated with different intra-spacing distances.

4. A method according to claim 3, wherein the directions of reference are located from the center of the array to the ends of the array in ascending order of the intra-spacing distances associated with said directions of reference.

5. A method according to claim 3 or 4, wherein M-body measurements are obtained for the different intra-spacing distances of the directions of reference of the array, the processing step, the simulation step and the comparison step being carried out for each different intra-spacing distance, the step of determining corrections being carried out as a function of the determined errors of spacing obtained for the different intra-spacing distances.

6. A method according to any one of claims 1 to 5, wherein during the step of performing measurements, the excitation signal has a predetermined duration enabling to perform a Rabi oscillation, the predetermined duration being divided into timesteps, the measurements being taken several times for each timestep of the predetermined duration.

7. A method according to any one of claims 1 to 6, wherein when the particles are neutral atoms, the measurements being carried out by exciting the corresponding particles and measuring the intensity of the fluorescent light emitted by said particles which de-excite.

8. A method according to any one of claims 1 to 7, wherein the 1-body experimental parameters and the M-body experimental parameters are each chosen among the following parameters: a heatmap, or average values over several trapping sites, of the damping rate defined as the inverse of the lifetime of a Rabi oscillation, a heatmap, or average values over several trapping sites, of the state-preparation-and-measurement error which is the error of detection of the presence or absence of a particle, a heatmap, or average values over several trapping sites, of the loading probability of particles per region of the calibration array and a particle loading probability on the calibration array.

9. A method according to any one of claims 1 to 8, wherein the step of processing measurements also enables to obtain additional parameters which are relative to the excitation signal, the additional parameters being chosen among: the intensity of the excitation signal, the detuning of the excitation signal and the alignment of the excitation signal, such additional parameters enabling to calibrate the source(s) of emission of the excitation signal.

10. A method according to any one of claims 1 to 9, wherein the simulation step is based on an equation and a Monte-Carlo approach, the equation enabling to simulate the interaction of the particles with the excitation signal while considering the interactions between particles trapped in a set of N trapping site.

11. A method according to any one of claims 1 to 10, wherein the method comprises a step of effectively generating N trapping sites by the generator of trapping sites on the basis of the set(s) of calibrated positions so that the N trapping sites are effectively positioned according to the calibrated position of a set, enabling to match a desired positioning pattern once the N trapping sites are filed with particles.

12. A method according to any one of claims 1 to 11, wherein during the step of performing measurements, the particles stochastically loaded in the trapping sites of the calibration array have not been rearranged.

13. A method according to any one of claims 1 to 12, wherein the particles are two-level systems able to undergo a Rabi oscillation, the particles being preferably neutral atoms.

14. A method according to any one of claims 1 to 13, wherein one or several other fitting parameters that are varied during the simulation step are chosen among: the detuning, the temperature of the particles, the trapping site depth, the frequency of the trapping sites, and the associated standard deviations of the positions of the N trapping sites in the set.

15. A computing system (10) comprising a quantum computer (12) and a classical computer (14), the computing system (10) being configured for carrying out steps of a method according to any one of claims 1 to 14.

10

12

14

FIG.1

```
┌─────────────────────────────────────────────┐
│                     100                      │
└─────────────────────────────────────────────┘
                        │
                        ▼
┌─────────────────────────────────────────────┐
│                     110                      │
└─────────────────────────────────────────────┘
                        │
                        ▼
┌─────────────────────────────────────────────┐
│                     120                      │
└─────────────────────────────────────────────┘
                        │
                        ▼
┌─────────────────────────────────────────────┐
│                     130                      │
└─────────────────────────────────────────────┘
                        │
                        ▼
┌─────────────────────────────────────────────┐
│                     140                      │
└─────────────────────────────────────────────┘
                        │
                        ▼
┌─────────────────────────────────────────────┐
│                     150                      │
└─────────────────────────────────────────────┘
                        │
                        ▼
┌─────────────────────────────────────────────┐
│                     160                      │
└─────────────────────────────────────────────┘
```

## FIG.2

## FIG.3

EP 4 718 340 A1

| | Pair 1 | | Pair 2 | | Pair 3 | | Pair 4 | | Pair 5 | |
|---|---|---|---|---|---|---|---|---|---|---|
| | ROI 1 | ROI 2 | ROI 3 | ROI 4 | ROI 5 | ROI 6 | ROI 7 | ROI 8 | ROI 9 | ROI 10 |
| Picture 1: | True | False | True | True | False | True | False | False | True | True |
| Picture 2: | True | False | True | False | False | False | True | False | False | False |
| Bitstring: | 1 | | 10 | | 0 | | | | 00 | |
| | 1-Body | | 2-Body | | 1-Body | | | | 2-Body | |

FIG.4

FIG.5

**Physically relevant quantities and experimental imperfections**

Laser noise (intensity and phase power spectral density)

Laser configuration (geometry, polarization, including imperfections)

State parameters (lifetime, matrix element, interaction coefficients)

State preparation an readout errors

. . .

**AtomLight**

Noise model & Hamiltonian

Build Schrödinger or master equation

Solve equations

Time evolution of states

**Simulations of experiments & calculations of benchmarks for optimization**

Gate fidelity

(Initial) state preparation fidelity

Time evolution of observables

. . .

FIG.6

Europäisches
Patentamt

European
Patent Office

Office européen
des brevets

# EUROPEAN SEARCH REPORT

**Application Number**

EP 24 30 6593

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 432 171 A1 (PASQAL [FR]) 18 September 2024 (2024-09-18) * paragraph [0021] - paragraph [0057]; figures 2-9 * | 1-15 | INV. G06N10/40 |
| A | US 2023/411035 A1 (SCHYMIK KAI-NIKLAS [DE] ET AL) 21 December 2023 (2023-12-21) * paragraph [0095] - paragraph [0225]; figures 2-6 * | 1-15 | |
| A | PATEL TIRTHAK ET AL: "Geyser a compilation framework for quantum computing with neutral atoms", PROCEEDINGS OF THE 2021 ACM SIGIR INTERNATIONAL CONFERENCE ON THEORY OF INFORMATION RETRIEVAL, ACMPUB27, NEW YORK, NY, USA, 18 June 2022 (2022-06-18), pages 383-395, XP058767733, DOI: 10.1145/3470496.3527428 ISBN: 978-1-4503-8620-3 * Abstract, 2. Background, 3. Geyser: design and implementation * | 1-15 | |
| A | MIROSHNYCHENKO Y ET AL: "Precision preparation of strings of trapped neutral atoms", NEW JOURNAL OF PHYSICS, INSTITUTE OF PHYSICS PUBLISHING, BRISTOL, GB, vol. 8, no. 9, 1 September 2006 (2006-09-01), pages 191-191, XP020107837, ISSN: 1367-2630, DOI: 10.1088/1367-2630/8/9/191 * Abstract, 1. Introduction, 3. Positioning individual atoms in the HDT * | 1-15 | TECHNICAL FIELDS SEARCHED (IPC) G06N G21K |

The present search report has been drawn up for all claims

| Place of search | Date of completion of the search | Examiner |
|---|---|---|
| The Hague | 20 February 2025 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6593

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2025

| Patent document cited in search report | | Publication date | Patent family member(s) | | Publication date |
|---|---|---|---|---|---|
| EP 4432171 | A1 | 18-09-2024 | EP | 4432171 A1 | 18-09-2024 |
| | | | WO | 2024189208 A1 | 19-09-2024 |
| US 2023411035 | A1 | 21-12-2023 | CA | 3201431 A1 | 19-05-2022 |
| | | | EP | 3996007 A1 | 11-05-2022 |
| | | | EP | 4244775 A1 | 20-09-2023 |
| | | | US | 2023411035 A1 | 21-12-2023 |
| | | | WO | 2022101145 A1 | 19-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOÏC HENRIET ; LUCAS BEGUIN ; ADRIEN SIGNOLES** ; **THIERRY LAHAYE** ; **ANTOINE BRO-WAEYS** ; **GEORGES-OLIVIER REYMOND** ; **CHRISTOPHE JURCZAK**. Quantum computing with neutral atoms. *Quantum*, September 2020, vol. 4, ISSN 2521-327X, 327